# DEMANDE DE BREVET EUROPEEN

(11) **EP 3 839 003 A1**
(43) Date de publication de la demande: **23.06.2021**
(21) Numéro de dépôt: 20210987.2
(22) Date de dépôt: 01.12.2020
(51) Int. Cl.: C09J 123/16, F02K 9/08, F02K 9/34

(54) **PROTECTION THERMIQUE AUTO-ADHÉRENTE POUR STRUCTURE MÉTALLIQUE**

(30) Priorité: 16.12.2019 FR 1914535
(71) Demandeur: ROXEL France, 33160 Saint Médard en Jalles (FR)
(72) Inventeur: FUNKE, Charles, 33160 SAINT-MEDARD-EN-JALLES (FR); MINNE, Andy, 33160 SAINT-MEDARD-EN-JALLES (FR)
(74) Mandataire: Marks & Clerk France

(57) **Abrégé**

L'invention se situe dans le domaine de la protection thermique et concerne une protection thermique 20, caractérisée en ce qu'elle comprend une matrice élastomère adhésive comprenant :
a. un élastomère ;
b. un agent d'adhésion métallique ;
c. une pluralité de charges ;
d. un agent vulcanisant.

L'invention concerne aussi un procédé de réalisation d'une telle protection thermique.

## Description

La présente invention se situe dans le domaine de la protection thermique. L'invention concerne une protection thermique comprenant une matrice élastomère adhésive. Elle concerne aussi son procédé de réalisation. L'invention s'applique particulièrement à une protection thermique sur une structure métallique, et encore plus particulièrement dans un environnement à températures très élevées, par exemple de l'ordre de 2000 K et plus, comme dans le domaine de la propulsion.

Une chambre de combustion dans un propulseur stocke le chargement propulsif de propergol solide. La poussée est produite par initiation du chargement de propergol solide par un dispositif d'allumage, les gaz de combustion débités sont accélérés par la ou les tuyère(s) et convertis en poussée.

La chambre de combustion est revêtue d'une protection thermique pour protéger la structure, le plus souvent métallique, des agressions thermiques interne et externe. En effet, les températures extrêmement élevées à l'intérieur de la chambre de combustion du propulseur peuvent être supérieures à 2000°C et les sollicitations suite à l'échauffement cinétique lors du vol peuvent atteindre les 300°C. La structure du propulseur doit donc être protégée afin de s'assurer du maintien de son intégrité tout le long de sa durée de vie.

Dans l'art antérieur, il existe plusieurs solutions pour assurer l'adhésion d'une protection thermique sur une structure métallique, par collage ou par l'utilisation d'un primaire d'adhésion avant vulcanisation de la protection thermique sur la structure. Or, les primaires d'adhérence utilisés sont constitués en grande partie de solvants dont certains parmi eux sont soumis à des restrictions SSE (abréviation pour Santé, Sécurité et Environnement) suite à la mise en place du règlement REACH. Le règlement REACH est un règlement de l'Union Européenne adopté pour mieux protéger la santé humaine et l'environnement contre les risques liés aux substances chimiques. Ces solvants ne peuvent donc plus être utilisés de façon pérenne. De plus, l'obligation de recourir à un primaire d'adhérence nécessite une ou plusieurs étapes supplémentaires préalablement à la dépose sur la structure métallique de la protection thermique en elle-même.

Le document EP 0659860 décrit une matrice élastomère adhésive qui adhère directement sur un substrat, notamment un propergol. La matrice comprend un élastomère, des charges, un isocyanate en tant qu'agent dopant l'adhésion. L'isocyanate en tant qu'agent dopant l'adhésion permet l'obtention d'une matrice avec des propriétés de collage améliorées par rapport à une matrice sans agent dopant l'adhésion ou avec l'oxamide en tant qu'agent dopant l'adhésion. La matrice élastomère adhésive du document EP 0659860 vise à son adhésion directe sur du propergol, éventuellement sur un substrat tissé assurant souplesse et résistance, ainsi que l'étanchéité du substrat tissé à divers fluides. Ce document reste silencieux quant aux conditions thermiques d'utilisation d'une telle matrice.

L'invention vise à pallier tout ou partie des problèmes cités plus haut en proposant une protection thermique auto-adhérente sur un substrat métallique, sans avoir recours à l'application d'une couche primaire entre le substrat métallique et la protection thermique. En outre, la protection thermique selon l'invention assure :
a. une bonne tenue aux conditions thermiques et ablatives lors de la combustion des chargements et à l'échauffement cinétique extérieur ;
b. une bonne tenue de la liaison entre la structure métallique et la protection thermique qui répond ainsi aux différentes sollicitations thermomécaniques auxquelles elle est soumise ;
c. le respect de la définition géométrique de la protection thermique, avec possibilité de fabrication de pièces fines avec des tolérances précises.

A cet effet, l'invention a pour objet une protection thermique, comprenant une matrice élastomère adhésive comprenant :
a. un élastomère ;
b. un agent d'adhésion métallique ;
c. une pluralité de charges ;
d. un agent vulcanisant.

Avantageusement, l'agent d'adhésion métallique est de la famille des méthacrylates.

Avantageusement, l'élastomère est choisi dans le groupe des copolymères éthylène-propylène-diène-monomère.

Avantageusement, l'agent vulcanisant comprend un peroxyde ou du soufre.

Avantageusement, la protection thermique selon l'invention comprend entre 5 et 20 parts en poids, et préférentiellement 10 parts en poids, d'agent d'adhésion métallique pour 100 parts en poids d'élastomère.

Avantageusement, la matrice élastomère adhésive comprend un isocyanate.

L'invention concerne aussi un procédé de réalisation d'une protection thermique comprenant une matrice élastomère adhésive, ledit procédé comprenant les étapes suivantes :
a. Plastification d'un élastomère ;
b. Malaxage de l'élastomère plastifié avec un agent d'adhésion métallique, une pluralité de charges et un agent vulcanisant pour obtenir une pâte;
c. Calandrage de la pâte en plaque ;
d. Optionnellement moulage des plaques pour obtenir une protection thermique préformée.
e. Vulcanisation de la plaque ou de la protection thermique préformée.

Le procédé de réalisation d'une protection thermique selon l'invention peut comprendre, avant l'étape de vulcanisation, une étape de pré-vulcanisation de la plaque dans un moule.

Avantageusement, l'étape de vulcanisation est réalisée en autoclave selon un cycle prédéfini.

L'invention concerne aussi une utilisation de la protection thermique telle que décrite dans cette demande de brevet sur un substrat métallique et/ou sur du propergol solide.

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 illustre schématiquement les étapes du procédé de réalisation d'une protection thermique selon l'invention ;
[Fig.2] la figure 2 représente schématiquement un exemple d'utilisation de la protection thermique selon l'invention dans un propulseur entre la structure métallique de la chambre de combustion et le propergol.

L'invention est décrite dans le domaine de la propulsion en relation avec un propulseur dans lequel un chargement propulsif de propergol solide est stocké. Toutefois, l'invention peut s'appliquer à tout type de surface métallique fortement sollicitée thermiquement.

La présente invention concerne une protection thermique comprenant une matrice élastomère adhésive comprenant :
a. un élastomère ;
b. un agent d'adhésion métallique ;
c. une pluralité de charges ;
d. un agent vulcanisant.

Un élastomère est un polymère présentant des propriétés élastiques obtenues après réticulation. Le terme de caoutchouc est un synonyme usuel d'élastomère. Un élastomère est constitué de longues chaînes moléculaires, appelées macromolécules, qui sont repliées sur elles-mêmes au repos. Les interactions entre chaînes sont faibles et sous l'action d'une contrainte externe, les chaînes possèdent de très nombreuses possibilités conformationnelles dans le domaine des températures d'utilisation. Ces chaînes macromoléculaires repliées sur elles-mêmes s'enchevêtrent avec leurs voisines et conduisent à un matériau élastique sous l'effet d'une faible contrainte. Lorsque l'on applique une plus forte contrainte, les chaînes vont se déployer, glisser et finir par se désolidariser les unes des autres. Pour limiter le glissement des chaînes du polymère les unes par rapport aux autres, une légère réticulation crée des nœuds d'ancrage tout en conférant au matériau une structure tridimensionnelle. Cette formation de liaisons chimiques, appelées encore ponts de réticulation, est le résultat de la vulcanisation.

La vulcanisation est une opération chimique consistant à incorporer un agent vulcanisant à un élastomère brut pour former, après cuisson, des ponts entre les chaînes moléculaires. Cette opération rend le matériau plus élastique.

Par charge, on entend une substance solide, non miscible et dispersée par un moyen mécanique dans une matrice. De manière connue dans l'art antérieur, une charge est introduite dans un mélange pour en particulier en diminuer le coût (c'est-à-dire pour un volume donné, ajouter de la matière peu chère), ou bien améliorer certaines propriétés (par exemple le pouvoir couvrant d'une peinture) ou encore modifier la densité.

L'invention repose sur la modification de la structure même de l'élastomère par incorporation d'un agent d'adhésion métallique. L'agent d'adhésion métallique permet d'établir des connexions qui sont à la fois physique et chimique entre la matrice élastomère et le substrat métallique lors de sa réticulation. Plus précisément, l'agent d'adhésion métallique intervient au niveau de la cohésion de la matrice élastomère avec le substrat métallique, ce qui permet d'obtenir une matrice élastomère auto-adhérente. De plus, l'agent d'adhésion métallique est compatible d'une utilisation en conditions extrêmes de température dans une gamme de 2000 K. Enfin, la pluralité de charges joue le rôle de barrière pyrolytique au sein de la matrice. Les charges ont pour fonction de rendre la matrice conductrice à l'électricité statique. Les charges peuvent être par exemple du noir de carbone, des charges granulaires ou des fibres. Elles permettent aussi de répondre au besoin de tenue thermomécanique de la matrice.

Avantageusement, l'agent d'adhésion métallique est de la famille des méthacrylates, ou sels d'acide méthacrylique, par exemple et plus avantageusement le méthacrylate de zinc.

L'élastomère peut être choisi dans le groupe des copolymères éthylène-propylène-diène-monomère.

L'agent vulcanisant peut comprendre un peroxyde ou du soufre.

La protection thermique selon l'invention comprend avantageusement entre 5 et 20 parts en poids d'agent d'adhésion métallique pour 100 parts en poids d'élastomère. Préférentiellement, la protection thermique selon l'invention comprend 10 parts en poids d'agent d'adhésion métallique pour 100 parts en poids d'élastomère.

La matrice élastomère adhésive comprend un dopant d'adhésion de type isocyanate, préférentiellement trimère d'isocyanate polyfonctionnel. Un tel dopant offre de bonnes propriétés d'adhésion avec des propriétés de collage améliorées par rapport à une matrice sans dopant d'adhésion. La présence d'isocyanate dans la matrice élastomère lui confère un pouvoir d'adhérence directe sur le propergol. Cette propriété est particulièrement intéressante dans le cas d'utilisation de la protection thermique dans un propulseur à propergol solide puisque la protection thermique est positionnée entre la paroi de la chambre de combustion et assure la tenue aux conditions thermiques et ablatives lors de la combustion du chargement propulsif, la tenue de la liaison entre la paroi et la protection thermique, et également la tenue de la liaison entre le propergol et la protection thermique.

L'invention concerne aussi un procédé de réalisation d'une protection thermique 20 comprenant une matrice élastomère adhésive, le procédé étant caractérisé en ce qu'il comprend les étapes suivantes :
a. Plastification (étape 101) d'un élastomère ;
b. Malaxage (étape 103) de l'élastomère plastifié 102 avec un agent d'adhésion métallique, une pluralité de charges et un agent vulcanisant pour obtenir une pâte 104;
c. Calandrage (étape 105) de la pâte 104 en plaque 106;
d. Optionnellement moulage (étape 111) des plaques 106 pour obtenir une protection thermique préformée non vulcanisée.
e. Vulcanisation insitu (étape 110) de la plaque 106 ou de la protection thermique préformée.

Autrement dit, le procédé de réalisation de la protection thermique 20 comprend la réalisation de la matrice élastomère adhésive à une structure métallique.

L'étape 101 de plastification peut être réalisée en mélangeur interne ou ouvert. Cette étape consiste à créer du cisaillement au niveau de la gomme solide de l'élastomère, et permet d'obtenir une pâte visqueuse 102 dans laquelle on peut incorporer les charges et les agents.

La protection thermique 20 obtenue après l'étape 110 de vulcanisation peut être soumise aux différentes sollicitations : sollicitation thermique à l'intérieur d'un propulseur (via les gaz de combustion) ou à l'extérieur (échauffement cinétique), sollicitation mécanique avec une très bonne tenue du collage structurel, et sollicitation thermomécanique face à l'ablation.

Après l'étape 105 de calandrage, une ou plusieurs plaque(s) 106 sont obtenues. On parle alors de plaques crues. Ces plaques crues peuvent être ensuite disposées dans le propulseur sur la structure métallique qui servira de substrat pour la protection thermique 20. En d'autres termes, les plaques crues sont positionnées à titre d'exemple contre les parois intérieures de la chambre de combustion du propulseur. Puis ces plaques en position sont vulcanisées lors de l'étape 110. Cette réalisation est particulièrement bien adaptée pour des géométries simples. On parle aussi de vulcanisation in-situ.

Dans certains cas, les plaques 106 peuvent être moulées et partiellement vulcanisées afin d'obtenir des protections thermiques préformées.

La vulcanisation de la plaque 106 ou de la préforme se fait au contact du substrat métallique (par exemple paroi de la chambre de combustion) et permet de créer les liaisons qui vont faire adhérer la protection thermique 20 au substrat. Plus précisément, l'invention agit au niveau moléculaire du substrat métallique et de la protection thermique pour les unir par le biais des liaisons chimiques au niveau de leur surface de contact, par création de ponts. La vulcanisation améliore grandement les caractéristiques de l'empilement et donc la conception du propulseur. On peut notamment citer une amélioration de la tenue thermomécanique. Des essais en configuration moteur ont permis de démontrer une excellente tenue à l'ablation sous conditions sévères avec des gaz de combustion diphasique (présence de particules d'alumine) dans une gamme de températures de l'ordre de 3000 K. On peut aussi citer une amélioration de la tenue au collage. Le tableau ci-dessous donne les caractéristiques des collages sur une structure métallique (en acier inoxydable). Les essais effectués sur l'assemblage testé (composé de la protection thermique comprenant la matrice élastomère adhésive vulcanisée in-situ et la structure en acier inoxydable) ont permis de démontrer une tenue au pelage doublée par rapport à un assemblage rapporté collé traditionnel.

**[Table 1]**

| | | |
|---|---|---|
| Pelage à 90° d'un assemblage protection thermique - acier inoxydable à 50 mm/min | T(°C) | Résistance moyenne au pelage |
| | +23 °C | 2,3 N/mm |
| | - 46 °C | 4,5 N/mm |
| | + 71°C | 2,2 N/mm |

La tenue des collages se voit aussi améliorée en température, notamment à l'échauffement cinétique, en rendant obsolète l'utilisation de primaire d'adhésion.

Comme la couche de primaire d'adhésion n'est plus nécessaire, il en résulte une diminution du cycle de fabrication puisqu'il n'y a plus d'étape de dépose de cette couche de primaire.

Dans un mode de réalisation, le procédé de réalisation d'une protection thermique selon l'invention comprend, avant l'étape 110 de vulcanisation, une étape 109 de pré-vulcanisation de la plaque 106 dans un moule. Cela rend possible d'obtenir des protections thermiques 20 de forme moins conventionnelles.

L'étape 110 de vulcanisation est ensuite réalisée en autoclave selon un cycle prédéfini.

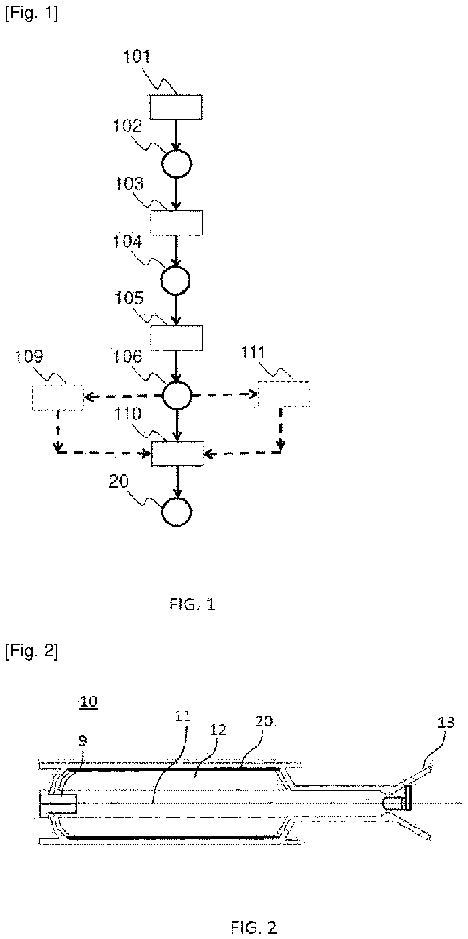

La figure 2 représente schématiquement un exemple d'utilisation de la protection thermique selon l'invention dans un propulseur entre la structure métallique de la chambre de combustion et le propergol. Le chargement propulsif 12 de propergol solide est stocké dans la chambre de combustion 11 du propulseur 10. Les gaz débités sont accélérés par un ensemble-tuyère 13 et convertis en poussée. La protection thermique 20 selon l'invention peut être utilisée sur un substrat métallique définissant l'intérieur de la chambre de combustion. Grâce à ses propriétés adhésives, la protection thermique selon l'invention adhère directement sur les parois de la chambre. Il n'est plus nécessaire de poser une couche de primaire. En plus de répondre aux restrictions SSE, une telle protection permet de diminuer la durée et les coûts de fabrication du propulseur.

En outre, lorsque la matrice élastomère comprend de l'isocyanate, la protection thermique adhère également directement au propergol solide. Il en résulte une protection thermique adhérente à la paroi de la chambre et permettant le maintien du propergol stocké dans la chambre de combustion.

## Revendications

1. Protection thermique (20), comprenant une matrice élastomère adhésive comprenant :
a. un élastomère ;
b. un agent d'adhésion métallique ;
c. une pluralité de charges ;
d. un agent vulcanisant,
**caractérisée en ce que** la matrice élastomère adhésive comprend un dopant d'adhésion de type isocyanate, préférentiellement trimère d'isocyanate polyfonctionnel.

2. Protection thermique (20) selon la revendication 1, **caractérisée en ce que** l'agent d'adhésion métallique est de la famille des méthacrylates.

3. Protection thermique (20) selon l'une quelconque des revendications 1 ou 2, **caractérisée en ce que** l'élastomère est choisi dans le groupe des copolymères éthylène-propylène-diène-monomère.

4. Protection thermique (20) selon l'une quelconque des revendications 1 à 3, **caractérisée en ce que** l'agent vulcanisant comprend un peroxyde ou du soufre.

5. Protection thermique (20) selon l'une quelconque des revendications 1 à 4, **caractérisée en ce qu'**elle comprend entre 5 et 20 parts en poids, et préférentiellement 10 parts en poids, d'agent d'adhésion métallique pour 100 parts en poids d'élastomère.

6. Protection thermique (20) selon l'une quelconque des revendications 1 à 5, **caractérisée en ce que** la matrice élastomère adhésive comprend un isocyanate.

7. Procédé de réalisation d'une protection thermique (20) comprenant une matrice élastomère adhésive, **caractérisé en ce qu'**il comprend les étapes suivantes :
a. Plastification (101) d'un élastomère ;
b. Malaxage (103) de l'élastomère plastifié avec un agent d'adhésion métallique, une pluralité de charges et un agent vulcanisant pour obtenir une pâte (104);
c. Calandrage (105) de la pâte en plaque (106) ;
d. Optionnellement moulage (111) de la plaque (106) pour obtenir une protection thermique préformée.
e. Vulcanisation (110) de la plaque (106) ou de la protection thermique préformée.

8. Procédé de réalisation d'une protection thermique (20) selon la revendication 7, **caractérisé en ce qu'**il comprend, avant l'étape (110) de vulcanisation, une étape (109) de pré-vulcanisation de la plaque (106) dans un moule.

9. Procédé de réalisation d'une protection thermique (20) selon l'une quelconque des revendications 7 ou 8, **caractérisé en ce que** l'étape (110) de vulcanisation est réalisée en autoclave selon un cycle prédéfini.

10. Utilisation de la protection thermique (20) selon l'une quelconque des revendications 1 à 6 sur un substrat métallique et/ou sur du propergol solide (12).
